# EUROPEAN PATENT APPLICATION

(11) **EP 1 095 949 A1**
(43) Date of publication of application: **02.05.2001**
(21) Application number: 00309443.0
(22) Date of filing: 26.10.2000
(51) Int. Cl.: C08C 1/04, C08K 5/098, C08L 7/02

(54) **Deproteinized natural rubber latex**

(30) Priority: 28.10.1999 JP 30760999
(71) Applicant: Sumitomo Rubber Industries, Ltd., Kobe-shi, Hyogo 651-0072 (JP)
(72) Inventor: Hamada, Akihiko, Kakogawa-shi, Hyogo 675-0112 (JP); Ichikawa, Naoya, Himeji-shi, Hyogo 670-0096 (JP)
(74) Representative: W.P. THOMPSON & CO.

(57) **Abstract**

A deproteinized natural rubber latex, which has protein in the latex in an amount of 0.1% by weight or less in terms of a nitrogen content based on a rubber solid content and a gelation time of from 5 to 25 minutes under the conditions that 1.5 parts by weight of sodium silicofluoride and 3 parts by weight of zinc white are incorporated based on 100 parts by weight of the rubber solid content of the latex. The deproteinized natural rubber latex is highly deproteinized and is superior in salt coagulation properties and mechanical stability.

## Description

### Background of the Invention

The present invention relates to deproteinized natural rubber latices. Latices according to the invention can have good salt coagulation properties and be superior in mechanical stability.

Natural rubbers have been widely used in various fields, for example, in industrial goods such as automobile tyres, belts and adhesives, domestic goods such as gloves, medical appliances such as catheters, lactation appliances, contraceptive devices and the like because of features such as large extension, high elasticity and strong film strength. Also foam rubbers made of a natural rubber latex have widely been used in various fields, for example, domestic goods such as mattresses, pillows, sleeping mats and cushions for chairs, vehicle goods such as cushions for seats, backings for carpets, packings of doors and the like.

However, these natural rubber products are produced by subjecting a rubber component prepared from a natural rubber latex by coagulation to operations such as mastication, incorporation of various components, molding and vulcanization, or produced by adding various components to a natural rubber latex, coating or dipping the mixture, and subjecting to operations such as drying and vulcanization. Alternatively, the foam rubber is produced by adding various components to a natural rubber latex, frothing the mixture, solidifying (gelation) the latex and passing through various processes such as molding, vulcanization and drying. All of these products contain a non-rubber component such as protein contained in the natural rubber latex.

However, the kinds and amounts of the protein vary depending on the production district and production season of the latex. Therefore, problems arise such as scatter in quality and vulcanization characteristics of a natural rubber as well as deterioration of qualities of the natural rubber, for example, mechanical characteristics such as creep characteristics and aging resistance, and electrical characteristics such as insulating properties.

Also there has recently been reported the case where respiratory distress and anaphylactoid symptoms (e.g. vascular edema, urticaria, collapse, cyanosis, etc.) are caused by a protein in the natural rubber when using medical appliances made of the natural rubber, such as operating gloves, various catheters, anesthetic masks and the like.

Accordingly, it has recently been requiredlargely to remove proteins contained in natural rubber latices, and a method of decomposing and removing a protein in a natural rubber latex to prepare a deproteinized natural rubber (latex) is suggested in Japanese Published Unexamined Patents(Kokai Tokkyo Koho Hei) Nos. 6-56902 to 6-56906.

It is considered that the protein in the natural rubber latex is generally adsorbed in rubber particles and is negatively charged strongly by ammonia to be incorporated into the natural rubber latex so that it contributes to stabilization of the rubber particles in the latex.

Accordingly, the deproteinized natural rubber latex obtained by largelyremoving the protein becomes unstable and a conventional deproteinized natural rubber latex was provided with enough stability to enable it to be present stably without being coagulated by incorporating various surfactants when mechanical stimulation such as strong stirring, friction or the like is applied.

However, the stability of the latex is drastically enhanced by incorporating the surfactant. For example, in the case of comparatively thick products made of a natural rubber, such as foam rubber, urea-introducing catheters and the like, which are molded by the salt coagulation method, there arises the problem that the coagulation of the latex hardly proceeds or does not occur.

Therefore, it is required to develop a natural rubber latex wherein protein is largely removed, thereby sufficiently suppressing the occurrence of allergy caused by the protein, the natural rubber latex further having proper salt coagulation properties and excellent mechanical stability.

### Summary of the Invention

Thus, an object of the present invention is to provide a deproteinized natural rubber latex which is deproteinized to a high degree and is preferably also superior in coagulation properties and excellent in mechanical stabilty.

The present inventors have intensively studied to solve the problems described above and found such a novel finding that, when the nitrogen content is adjusted to a predetermined amount or less and the gelation time is adjusted within a predetermined range under the conditions that sodium silicofluoride and zinc white are incorporated in a predetermined amount by subjecting to a deproteinization treatment using a proteolytic enzyme and a fatty acid salt-based anionic surfactant, there can be obtained a latex which is highly deproteinized and has good salt coagulation properties and mechanical stability. Thus, the present invention has been completed.

The deproteinized natural rubber latex according to the present invention is characterizedin that protein in the latex is removed to an amount of 0.1% by weight or less in terms of nitrogen content based on a rubber solids content and that the gelation time under the conditions that 1.5 parts by weight of sodium silicofluoride and 3 parts by weight of zinc white are incorporated based on 100 parts by weight of the rubber solids content of the latex is within a range from 5 to 25 minutes.

By the deproteinized natural rubber latex of the present invention, it is made possible to retain high stability by removing protein, which can cause immediate allergy, to the fixed degree and to reconcile excellent coagulation properties and stability during the molding process in cases where a natural rubber product is directly molded from the latex by the salt coagulation method.

The deproteinized natural rubber latex of the present invention is prepared, for example, by incorporating a proteolytic enzyme and a C₁₄₋₂₂ aliphatic acid-based anionic surfactant into a natural rubber latex and subjecting the mixture to a deproteinization treatment.

The deproteinized natural rubber latex of the present invention is preferably characterized in that a total alkalinity in the latex is within a range from 0.2 to 0.4% by weight calculated on the ammonia basis.

In the present invention, the term "gelation time" refers to the time required for a natural rubber latex to lose fluidity as a result of gelatin immediately after incorporating 1.5 parts by weight of sodium silicofluoride and 3 parts by weight of zinc white based on 100 parts by weight of the rubber solid content of the natural rubber latex.

The nitrogen content (N%) is a value determined by the Kjeldahl method and is an index which indicates the amount of protein remaining in the rubber solid or latex.

The alkalinity is determined in accordance with Japanese Industrial Standard (JIS) 6381-₁₉₈₂ (Natural Rubber Latex).

### Detailed Description of the Invention

The deproteinized natural rubber latex of the present invention can be prepared by removing protein as a non-rubber component from a natural rubber latex with washing, and is characterized in that:
(i) the protein in the latex is removed in an amount of 0.1% by weight or less in terms of a nitrogen content based on a rubber solid content; and
(ii) a gelation time under the conditions that 1.5 parts by weight of sodium silicofluoride and 3 parts by weight of zinc white are incorporated based on 100 parts by weight of the rubber solid content of the latex is within a range from 5 to 25 minutes.

The nitrogen content (N%) described in (i) indicates the degree of the deproteinization attained by the deproteinization treatment. When this value exceeds 0.1% by weight based on the rubber solids content, there is a problem that a fear of the occurrence of allergy caused by the protein cannot be removed and the stability of the latex is lowered by putrefaction of the protein.

Since the protein is largely removed to an amount of 0.1% by weight or less in terms of a nitrogen content based on a rubber solid content in the deproteinized natural rubber latex of the present invention, as shown in (i), the fear of the occurrence of immediate allergy caused by the protein is sufficiently suppressed, thus providing high safety to the human body and a latex having high safety.

The nitrogen content (N%) is preferably 0.05% by weight or less, and more preferably 0.02% by weight or less. Even in case of a natural rubber latex subjected to the deproteinization treatment, short-chain peptide molecules in the intermolecular bonds of a lower molecular weight rubber component remains in the rubber without being removed. These short-chain peptide molecules do not cause allergies, but about 0.02% nitrogen inevitably remains due to the short-chain peptide molecules. Accordingly, it can be judged that proteins are completely removed if the nitrogen content is reduced to 0.02% or less.

The term "gelation time" described in (ii) refers to a time required for a latex to lose fluidity as a result of gelatin immediately after incorporating 1.5 parts by weight of sodium silicofluoride and 3 parts by weight of zinc white based on 100 parts by weight of the rubber solids content of the latex. When the gelation time is within a range from 5 to 25 minutes, the coagulation properties required to produce a salt coagulated product of the latex are secured.

Furthermore, the effect of enhancing the stability of the latex can be obtained by adjusting the gelation time within the above range.

According to the latex of the present invention, when the nitrogen content (N%) satisfies the above range, not only lowering of the stability of the latex is prevented, but also the stability of the latex can be further enhanced by the synergistic effect of the adjustment of the nitrogen content and adjustment of the gelation time within the above range, thus making it possible to simultaneously satisfy sufficient stability and coagulation properties in the production of the coagulated product from the latex using a salt.

When the gelation time is lower than the above range, the time up to coagulation increases excesively so that air is entrapped and pinholes are liable to be formed, thereby making it impossible to form a film having a uniform film thickness according to the dipping method of previously coating a mold with a solidifying agent and dipping the mold in a latex to form a film. According to the method of foaming a latex, incorporating a late gelling agent, filling a mold with the latex and solidifying it like in case of producing a foam rubber, sufficient process time cannot be obtained so that the latex is coagulated before the mold is filled with the latex. Furthermore, when the gelation time is lower than the above range, the latex becomes unstable within a very short time to cause a problem that the coagulm is liable to be formed.

On the other hand, when the gelation time exceeds the above range, the coagulation of the latex proceeds slowly or does not proceed so that the film thickness becomes smaller and the gelation strength is lowered according to the dipping method. According to the method of molding by incorporating a late gelling agent, the resulting foams cannot be retained and are broken up to the coagulation so that a desired fine sponge structure can not be obtained, or it becomes impossible to mold the product itself.

The gelation time is preferably within a range from 10 to 20 minutes, and more preferably from 12 to 18 minutes.

In the deproteinized natural rubber latex of the present invention, the rubber content is not specifically limited, but is usually set within a range from 55 to 65% by weight.

When using the deproteinized natural rubber latex of the present invention for a salt coagulated product, the pH is preferably maintained within an alkali range. In this case, the pH is preferably within a range from 9 to 12, and more preferably from 10.3 to 10.8.

### Method of producing deproteinized natural rubber latex

The deproteinized natural rubber latex of the present invention is produced, for example, by the following procedure.

First, a proteolytic enzyme and a C₁₄₋₂₂ fatty acid salt-based anionic surfactant are incorporated into a field latex or a high ammonia latex, and then the mixture is aged by allowing to stand at 20-60°C , preferably about room temperature for about two hours to one week, thereby to decompose proteins. Then, the latex is appropriately diluted and centrifuged to separate and recover rubber particles of the latex.

In the method of producing deproteinized natural rubber latex, the amount of the proteolytic enzyme is preferably adjusted within a range from about 0.0001 to 20 parts by weight based on 100 parts by weight of the rubber solids content, while the amount of the C₁₄₋₂₂ fatty acid salt-based anionic surfactant is adjusted within a range from about 0.1 to 20 parts by weight based on 100 parts by weight of the rubber solids content.

In the method of producing deproteinized natural rubber latex, the concentration after the protein decomposition treatment may be conducted by ultrafiltration in place of centrifugation.

The decomposition of the protein can be conducted by employing the following method in place of the method using a proteolytic enzyme.

First, a natural rubber latex is mixed with an aqueous 20-30% KOH or NaOH solution in a volume ratio of 9:1 and a C₁₄₋₂₂ fatty acid salt-based an ionic surfactant is incorporated, and then the mixture is aged at room temperature for 2 to 10 days. Then, the mixture is diluted and purified by a concentration treatment such as centrifugation.

### Raw materials

### Natural rubber latex

The natural rubber latex used to produce the deproteinized natural rubber latex of the present invention may be any of a field latex obtained as a rubber sap and an ammonia-retained concentrated latex.

### Proteolytic enzyme

As the proteolytic enzyme, various conventionally known enzymes can be used. Among these enzymes, alkali protease is preferably used. The protease may be derived from any of bacteria, filamentous bacteria and yeast, and the protease is preferably derived from bacteria. It is more preferable to use "Kao Protease KAP, manufactured by Kao Corp." with a resistance to a surfactant.

### Amount of proteolytic enzyme

The amount of the proteolytic enzyme to be incorporated into the natural rubber latex is determined by the activity of the proteolytic enzyme, but is usually set within a range from 0.0001 to 20 parts by weight, and preferably from 0.001 to 10 parts by weight, based on 100 parts by weight of the rubber content in the latex.

When the amount of the proteolytic enzyme is lower than the above range, the deproteinization effect tends to become insufficient and it is likely to become impossible to sufficiently remove a fear of the occurrence of immediate allergy caused by the protein.

On the other hand, even if the proteolytic enzyme is incorporated in the amount that exceeds the above range, the expected effect cannot be exerted or it is likely to become impossible to obtain the effect corresponding to the cost.

### Fatty acid salt-based anionic surfactant

Examples of surfactants which can be used to produce the deproteinized natural rubber latex of the present invention include C₁₄₋₂₂ fatty acid salt-based anionic surfactants.

The fatty acid constituting the fatty acid salt of the anionic surfactant may be any of a saturated fatty acid and an unsaturated fatty acid, and may be any of straight-chain, branched and Guerbet-like fatty acids. Furthermore, these fatty acids may be used alone or in combination.

The fatty acid may have 14 to 22 carbon atoms, as described above, and specific examples of the fatty acid include myristic acid (C=14), palmitic acid (C=16), stearic acid (C=18), arachic acid (C=20), behenic acid (C=22) and the like. Specific examples of the unsaturated fatty acid include oleic acid (C=18), elaidic acid (C=18), ricinolic acid (C=18), lioleic acid (C=18), linolenic acid (C=18), arachidonic acid (C=20), cetoleic acid (C=22), erucic acid (C=22), brassidic acid (C=22) and the like.

Among these fatty acid salts, oleic acid salt and ricinolic acid salts are preferably used. The reason for this is as follows: since oleic acid salt or ricinolic acid salt also serve as a blowing agent, the amount of the blowing agent can be reduced.

A fatty acid salt-based anionic surfactant having 13 or less carbon atoms can also be used in combination with the C₁₄₋₂₂ fatty acid salt-based anionic surfactant. A lauric acid salt having 12 or less carbon atoms is particularly superior in effect of improving the stability of the latex so that balance between the mechanical stability and gelation properties of the latex can be further improved by using in combination with those having 14 to 22 carbon atoms.

### Amount of fatty acid salt-based anionic surfactant

The amount of the C₁₄₋₂₂ fatty acid salt-based anionic surfactant to be added to the natural rubber latex is preferably within a range from 0.1 to 20 parts by weight, more preferably from 5 to 10 parts by weight, based on 100 parts by weight of the rubber solid content in the latex.

When the amount of the C₁₄₋₂₂ fatty acid salt-based anionic surfactant is lower than the above range, mechanical stability of the latex may not be obtained and gelation is likely to proceed before casting into a mold when a rubber product is produced by casting. When using a surfactant other than the C₁₄₋₂₂ fatty acid salt-based anionic surfactant, the latex may become too stable, thereby causing a problem that the gelation time is excessively increased.

On the other hand, even if the C₁₄₋₂₂ fatty acid salt-based anionic surfactant is incorporated in the amount that exceeds the above range, the expected effect may not be achieved and it is likely to become impossible to obtain the effect corresponding to the cost.

### Other additives

After subjecting to the deproteinization treatment, conventionally known additives such as vulcanizing agents, vulcanization accelerators, auxiliary vulcanization accelerators, vulcanization retardants, fillers, plasticizers, softeners, reinforcers and the like can be incorporated into the deproteinized natural rubber latex of the present invention.

Ammonia can be further incorporated into the latex subjected to the deproteinization treatment, thereby appropriately adjusting the total alkalinity of the latex.

The adjustment of the gelation time can be facilitated furthermore by adjusting the total alkalinity in the latex within a range from 0.2 to 0.4% by weight calculated on the ammonia basis.

### Applications of deproteinized natural rubber latex of the present invention

The deproteinized natural rubber latex of the present invention can be not only used in the fields such as gloves, contraceptive devices, medical appliances, and rubber threads, but also used as raw materials of comparatively thick rubber products, i.e. raw materials of foam rubbers and catheters.

### Examples

The following Examples and Comparative Examples further illustrate the present invention, but the present invention is not limited by the following Examples.

### Components used

The various components used in the Examples and Comparative Examples are as follows.

### Natural rubber latex

Either of a high ammonia natural rubber latex [trade name "Soctex", rubber solid content of 60% by weight] (hereinafter referred to as "HA latex") and a natural rubber field latex manufactured by Felda Co. in Malaysia [rubber solid content of 30% by weight] (hereinafter referred to as a "field latex") was used.

### Proteolytic enzyme

As the proteolytic enzyme, an alkali protease [manufactured by Kao Corp. under the trade name of "Kao Protease KAP" having a resistance to a surfactant was used.

### Fatty acid salt-based anionic surfactant

As the fatty acid salt-based anionic surfactant, any of an aqueous potassium oleate solution [number of carbon atoms of fatty acid: 18, active component: 21%, manufactured by Kao Corp. under the trade name of "FR-14"], an aqueous potassium castor oil (principal component: ricinoleic acid) solution [ number of carbon atoms of fatty acid as a principal component: 18, active component: 33%, manufactured by Kao Corp. under the trade name of "FR-25"] and an aqueous ammonium laurate solution (number of carbon atoms of fatty acid: 12, active component: 20%) or a mixture of two or more kinds of them was used.

The aqueous ammonium laurate solution was prepared by mixing 18.4% by weight of lauric acid, 8.4% by weight of 28% ammonia water and 73.2% by weight of deionized water.

### Other surfactants

In Comparative Examples 1 to 7, as the surfactant, any of an aqueous solution containing a 10% active component prepared by diluting sodium polyoxyethylene (2) lauryl ether sulfate [active component: 70%, manufactured by Kao Corp. under the trade name of "EMAL E70C"] as a sulfate-based anionic surfactant with deionized water, an aqueous solution containing a 10% active component prepared by diluting polyoxyethylene nonyl phenyl ether [active component: 100%, HLBS: 15.5, manufactured by Kao Corp. under the trade name of "EMULGEN 920"] as a nonionic surfactant with deionized water, and triethanolamine polyoxyethylene lauryl ether sulfate [active component: 40%, manufactured by Kao Corp. under the trade name of "EMAL 20T"] as a sulfate-based anionic surfactant was used.

### Preparation of deproteinized natural rubber latex

### Example 1

0.07 Parts by weight of a proteolytic enzyme and 9.5 parts by weight (active component: 2.0 parts by weight) of FR-14 (C₁₈ fatty acid salt-based anionic surfactant) were incorporated into 166.7 parts by weight of a HA latex (rubber solidcontent: 100 parts by weight) and, furthermore, deionized water was added to make 333.3 parts by weight as the total amount.

The latex thus prepared was aged by allowing to stand at 30°C for 24 hours, thereby to decompose a protein.

After deionized water was added to 333.3 parts by weight of the latex whose protein was decomposed to make the total amount to 1000.0 parts by weight (solid rubber content: 10% by weight), the solution was charged in a disc type continuous centrifugal separator and centrifuged at 10000 rpm (acceleration of gravity: about 9000 G) for 10 to 30 minutes.

After the completion of the centrifugation treatment, the resulting cream component was recovered and diluted with deionized water and ammonia was added to obtain a deproteinized natural rubber latex having a solid rubber content of 60.0% by weight and a total alkalinity of 0.3% by weight (calculated on the ammonia basis).

### Examples 2 and 3

In the same manner as in Example 1, except that a fatty acid salt-based anionic surfactant (ammonium laurate) having 12 carbon atoms was used in combination with "FR-14" in the amount shown in Table 1, deproteinized natural rubber latexes having a solid rubber content of 60.0% by weight and a total alkalinity of 0.3% by weight (calculated on the ammonia basis) were obtained.

### Example 4

In the same manner as in Example 1, except that "FR-25" containing a fatty acid having 18 carbon atoms as the principal component was used in place of "FR-14" as the fatty acid salt-based anionic surfactant, deproteinized natural rubber latexes having a solid rubber content of 60.0% by weight and a total alkalinity of 0.3% by weight (calculated on the ammonia basis) were obtained.

### Examples 5 and 6

In the same manner as in Example 1, except that a fatty acid salt-based anionic surfactant (ammonium laurate) having 12 carbon atoms was used in combination with "FR-25" in the amount shown in Table 1, deproteinized natural rubber latexes having a solid rubber content of 60.0% by weight and a total alkalinity of 0.3% by weight (calculated on the ammonia basis) were obtained.

### Example 7

In the same manner as in Example 1, except that the total alkalinity was adjusted to 0.1% by weight on addition of ammonia after the recovery of the cream component, a deproteinized natural rubber latex having a solid rubber content of 60.0% by weight was obtained.

### Example 8

In the same manner as in Example 1, except that the total alkalinity was adjusted to 0.5% by weight on addition of ammonia after the recovery of the cream component, a deproteinized natural rubber latex having a solid rubber content of 60.0% by weight was obtained.

### Example 9

0.07 Parts by weight of a proteolytic enzyme and 9.5 parts by weight (active component: 2.0 parts by weight) of "FR-25" and 2.5 parts by weight (active component: 2.0 parts by weight) of ammonium laurate were incorporated into 333.3 parts by weight of a natural rubber latex (rubber solid content: 100 parts by weight).

The latex thus prepared was aged by allowing to stand at 30°C for 24 hours, thereby to decompose a protein.

After deionized water was added to 345.4 parts by weight of the latex whose protein was decomposed to make the total amount to 1000.0 parts by weight (solid rubber content: 10% by weight), the solution was subjected to the centrifugation treatment in the same manner as in Example 1.

After the completion of the centrifugation treatment, the dilution of the cream component and the addition of ammonia were conducted in the same manner as in Example 1 to obtain a deproteinized natural rubber latex having a solid rubber content of 60.0% by weight and a total alkalinity of 0.3% by weight (calculated on the ammonia basis).

### Example 10

In the same manner as in Example 7, except that the amount of ammonium laurate was adjusted to 0.5% by weight (active component: 1.0% parts by weight), a deproteinized natural rubber latex having a solid rubber content of 60.0% by weight and a total alkalinity of 0.3% by weight (calculated on the ammonia basis) was obtained.

### Example 11

345.4 Parts by weight of the latex whose protein was decomposed was diluted to make 500 parts by weight (to make the rubber solid content to 20%) as the total amount by adding deionized water in the same manner as in Example 7, and then the centrifugation treatment, the dilution of the cream component and the addition of ammonia were conducted in the same manner as in Example 1 to obtain a deproteinized natural rubber latex having a solid rubber content of 60.0% by weight and a total alkalinity of 0.3% by weight (calculated on the ammonia basis).

With respect to Examples 1 to 11, the amount of various surfactants to be incorporated based on 100 parts of the rubber solid content of the latex and the rubber solid content of the latex on centrifugal treatment are shown in Table 1 and Table 2.

**[Table 1]**

| Examples No. | 1 | 2 | 3 | 4 | 5 | 6 |
|---|---|---|---|---|---|---|
| [On deproteinization treatment] | | | | | | |
| Kinds of latex*1 | HA | HA | HA | HA | HA | HA |
| Amount of deproteinizing enzyme*2 | 0.07 | 0.07 | 0.07 | 0.07 | 0.07 | 0.07 |
| Amount of surfactant *³ | | | | | | |
| FR-14 | 2.0 | 2.0 | 2.0 | 3.0 | 2.0 | 2.0 |
| FR-25 | - | - | - | - | 2.0 | 2.0 |
| Ammonium laurate | - | 0.5 | 1.0 | - | 0.5 | 1.0 |
| [On centrifugation treatment] | | | | | | |
| Rubber solid content (%) | 10 | 10 | 10 | 10 | 10 | 10 |
| [after adjust of cream content] | | | | | | |
| Total solid content (%) | 60.0 | 60.0 | 60.0 | 60.0 | 60.0 | 60.0 |
| Total alkalinity (%) | 0.3 | 0.3 | 0.3 | 0.3 | 0.3 | 0.3 |

| | | | | | | |
|---|---|---|---|---|---|---|
| *1: HA denotes a HA latex. | | | | | | |
| *2: It is an amount (parts by weight) based on 100 parts by weight of the rubber solid content in the latex. | | | | | | |
| *3: It is an amount of an active component in the surfactant and is an amount (parts by weight) based on 100 parts by weight of the rubber solid content in the latex. | | | | | | |

**[Table 2]**

| Examples No. | 7 | 8 | 9 | 10 | 11 |
|---|---|---|---|---|---|
| [On deproteinization treatment] | | | | | |
| Kinds of latex*1 | HA | HA | F | F | F |
| Amount of deproteinizing enzyme*2 | 0.07 | 0.07 | 0.07 | 0.07 | 0.07 |
| Amount of surfactant*3 | | | | | |
| FR-14 | 2.0 | 2.0 | - | - | - |
| FR-25 | - | - | 2.0 | 2.0 | 2.0 |
| Ammonium laurate | - | - | 0.5 | 1.0 | 0.5 |
| [On centrifugation treatment] | | | | | |
| Rubber solid content (%) | 10 | 10 | 10 | 10 | 20 |
| [after adjust of cream content] | | | | | |
| Total solid content (%) | 60.0 | 60.0 | 60.0 | 60.0 | 60.0 |
| Total alkalinity (%) | 0.1 | 0.5 | 0.3 | 0.3 | 0.3 |

| | | | | | |
|---|---|---|---|---|---|
| *1: HA denotes a HA latex and F denotes a field latex. | | | | | |
| *2: It is an amount (parts by weight) based on 100 parts by weight of the rubber solid content in the latex. | | | | | |
| *3: It is an amount of an active component in the surfactant and is an amount (parts by weight) based on 100 parts by weight of the rubber solid content in the latex. | | | | | |

### Comparative Example 1

In the same manner as in Example 1, except that no surfactant was added, the decomposition treatment of the protein and the centrifugal treatment were conducted. After the completion of the centrifugation treatment, the dilution of the cream component and the addition of ammonia were conducted in the same manner as in Example 1 to obtain a deproteinized natural rubber latex having a solid rubber content of 60.0% by weight and a total alkalinity of 0.3% by weight (calculated on the ammonia basis).

### Comparative Example 2

The same HA latex as that used in Example 1 was subjected to the centrifugation treatment without subjecting to the decomposition treatment of the protein, that is, without adding the proteolytic enzyme nor surfactant and without subjecting to the aging operation.

The centrifugation treatment was conducted at about 10000 rpm for 30 minutes using a portable disc type centrifugal separator in the same manner as in Example 1 after diluting so that the rubber solid content of the latex becomes 30% by weight.

After the completion of the centrifugation treatment, the resulting cream component was recovered and diluted with deionized water and then ammonia was added to obtain a deproteinized natural rubber latex having a solid rubber content of 60.0% by weight and a total alkalinity of 0.3% by weight (calculated on the ammonia basis).

### Comparative Example 3

In the same manner as in Comparative Example 1, except that the field latex was used in place of the HA latex, the decomposition treatment of the protein and the centrifugation treatment were conducted.

After the completion of the centrifugation treatment, the dilution of the cream component and the addition of ammonia were conducted in the same manner as in Example 1 to obtain a deproteinized natural rubber latex having a solid rubber content of 60.0% by weight and a total alkalinity of 0.3% by weight (calculated on the ammonia basis).

### Comparative Examples 4 to 7

In the same manner as in Example 1, except that EMAL E-70C, EMULGEN 920 or EMAL 20T was incorporated in place of the fatty acid salt-based anionic surfactant (FR-14, FR-25 or ammonium laurate) in the amount shown in Table 3, the decomposition treatment of the protein and the centrifugation treatment were conducted. After the completion of the centrifugation treatment, the dilution of the cream component and the addition of ammonia were conducted in the same manner as in Example 1 to obtain deproteinized natural rubber latexes having a solid rubber content of 60.0% by weight and a total alkalinity of 0.3% by weight (calculated on the ammonia basis).

### Comparative Examples 8 and 9

In the same manner as in Example 1, except that only ammonia laurate having 14 carbon atoms was incorporated in the amount shown in Table 3, the decomposition treatment of the protein and the centrifugation treatment were conducted. After the completion of the centrifugation treatment, the dilution of the cream component and the addition of ammonia were conducted in the same manner as in Example 1 to obtain deproteinized natural rubber latexes having a solid rubber content of 60.0% by weight and a total alkalinity of 0.3% by weight (calculated on the ammonia basis).

With respect to Comparative Examples 1 to 9, the amount of various surfactants to be incorporated based on 100 parts of the rubber solid content of the latex and the rubber solid content of the latex on centrifugal treatment are shown in Table 3.

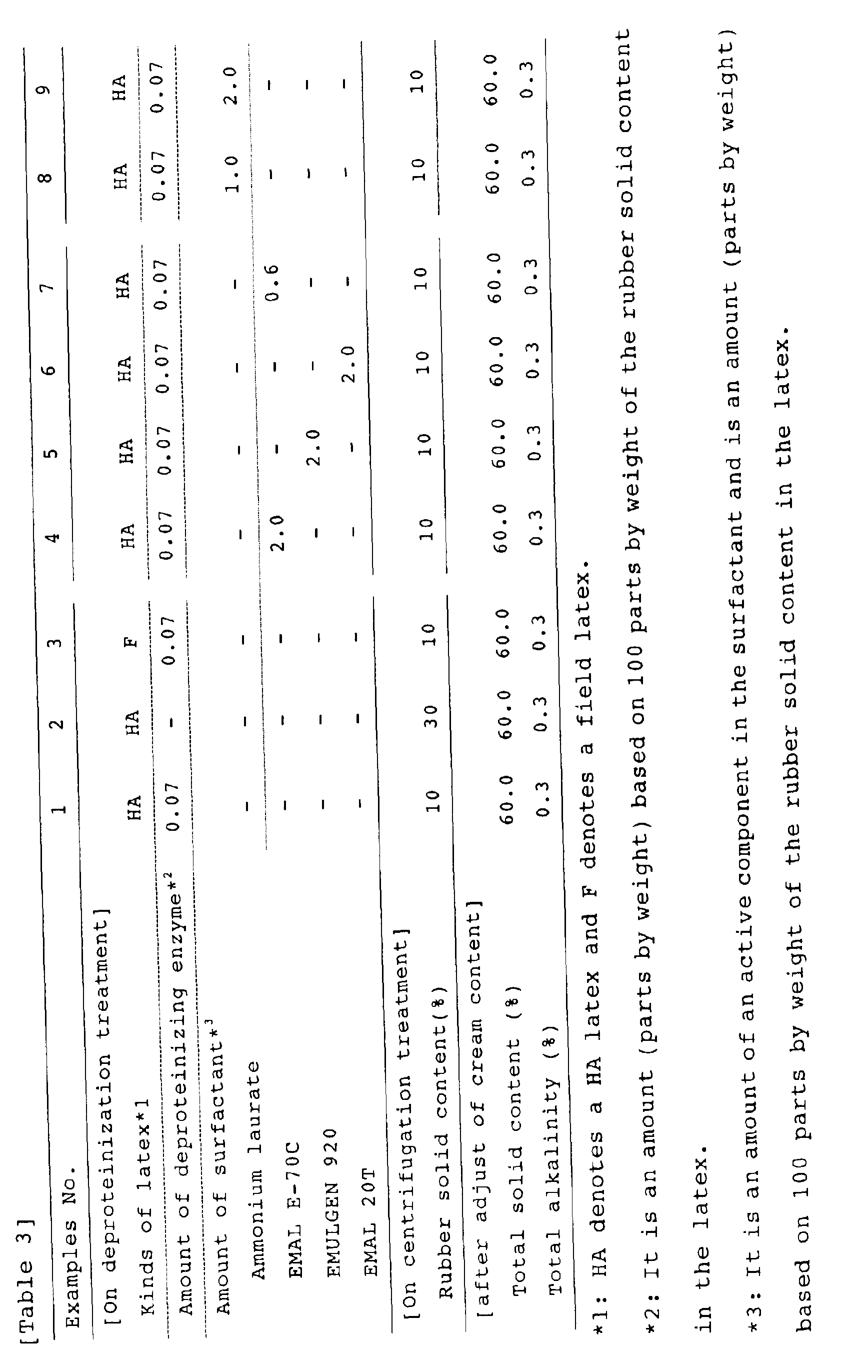

### Evaluation of physical properties of deproteinized natural rubber latex

With respect to the deproteinized natural rubber latexes obtained in the above Examples and Comparative Examples, the measurement of the gelation time under the conditions that sodium silicofluoride and zinc white are incorporated and the measurement of the nitrogen content by the Kjeldahl method were conducted.

With respect to the deproteinized natural rubber latex obtained in the above Examples and Comparative Examples, the stability and gelation properties were evaluated.

### Stability

(a) The mechanical stability by the Kraxon testing machine was measured in accordance with ISO 35.
(b) In accordance with the foam rubber formulation by the Dunlop method shown in Table 4, the components were mixed, and the frothing and addition of a gelation agent were conducted, followed by observation during the subsequent processes such as addition of sodium silicofluoride, casting into a mold and gelation. The stability was evaluated according to the following criteria.
   5: Any coagulum was not formed (no problem).
   4: A small amount of a fine coagulum was observed after gelation.
   3: A coagulum was formed when a gelation agent was incorporated.
   2: A coagulum was formed on frothing (foaming) and stirring.
   1: The resulting latex could not be used because a large amount of a coagulum has already been formed on incorporation and stirring.

**[Table 4]**

| | TSC TSC (%) | Solid content (parts by weight) | Total weight (parts by weight) |
|---|---|---|---|
| DPNR latex obtained in Examples and Comparative Examples | 60 | 100 | 166.7 |
| Potassium oleate (late gelling agent) | 21 | 1.0 | 4.8 |
| Sulfur (vulcanizing agent) | 50 | 2.0 | 4.0 |
| Vulcanization accelerator BZ | 50 | 1.0 | 2.0 |
| Vulcanization accelerator MZ | 50 | 0.5 | 1.0 |
| Trimene Base | 50 | 1.0 | 2.0 |
| Sodium silicofluoride (late gelling agent) | 33.3 33.3 | 1.0 | 3.0 |
| Zinc white (vulcanization accelerator) | 50 50 | 4.0 4.0 | 8.0 8.0 |
| *: Triethyltrimethylenetriamine ("Trimene Base" is a trade name of Uniroyal Co.) | | | |
| **: TSC(%) = [(Solid content)/(Total weight)] × 100(%) | | | |

### Gelation properties

(a) The latex was dipped in an aqueous 10% potassium nitrate solution charged in a test tube, dried and then dipped for 30 seconds. After drying at 100°C again for one hour, the thickness of the formed rubber film was measured.
(b) The foam rubber was molded in the same manner as in (b) of the "stability test) and the state of the gelation was evaluated.

The above results are shown in Tables 5 to 7.

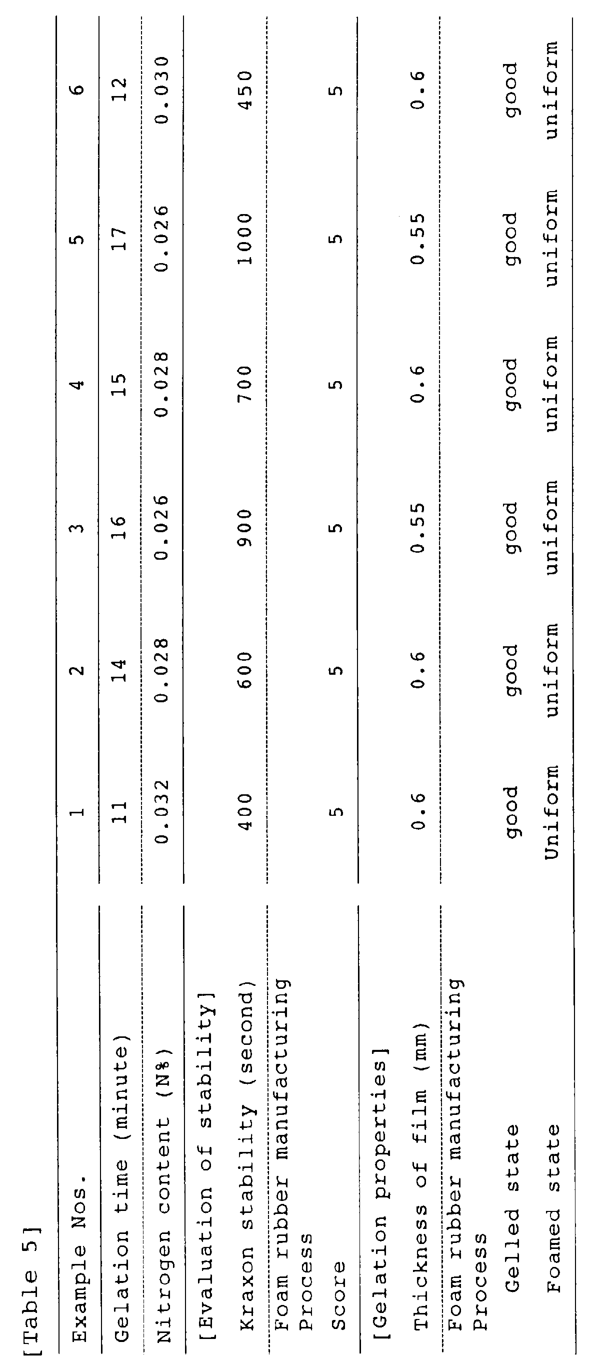

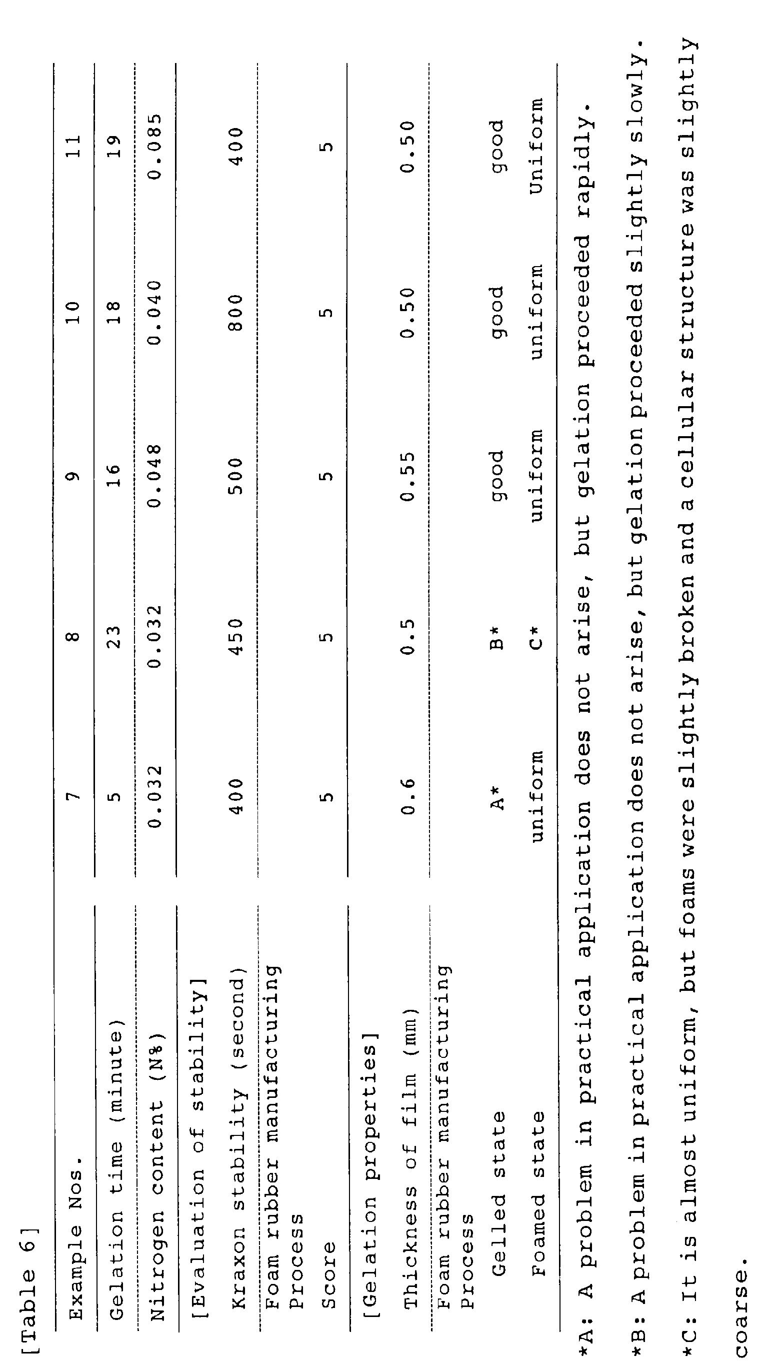

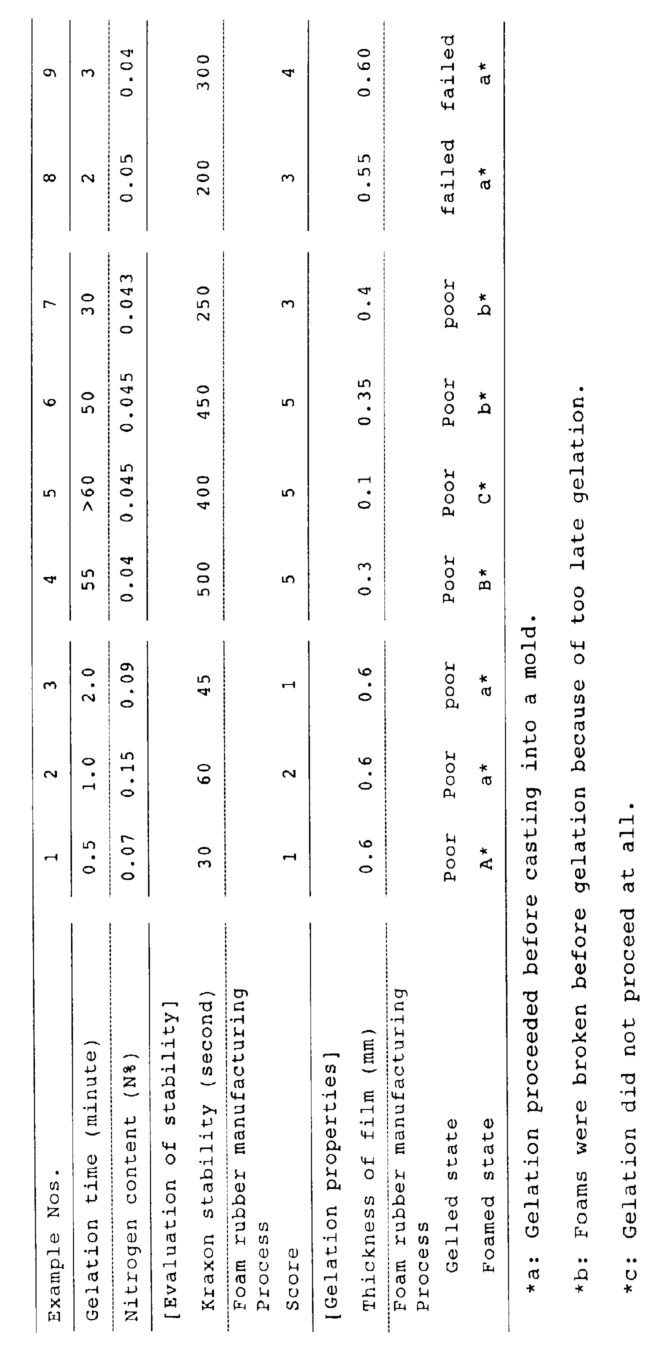

As is apparent from Tables 5 to 7, since the nitrogen content is low such as 0.1% by weight or less in the latexes of Examples 1 to 11, it was made possible to sufficiently suppress allergy caused by the protein with respect to the rubber product obtained by using these latexes.

Regarding any of the latexes of Examples 1 to 11, the gelation time was within a range from 5 to 25 minutes. In particular, the gelation time was within a range from 10 to 20 minutes in the latexes of Examples 1 to 6 and 9 to 11. The latexes exhibited enough coagulation properties to produce rubber products by the salt coagulation method.

Furthermore, the results of the Kraxon stability exhibited sufficiently long time and did not cause a problem that the coagulm is formed during the manufacturing process of the foam rubber. Any of the Examples exhibited good gelation properties and rubber products having a sufficient film thickness could be produced.

In Example 7, since the total alkalinity after adjusting the cream content was slightly low such as 0.1%, the gelation time was apt to be increased slightly. In this case, a problem in practical application does not arise, but the process time (concretely, time up to casting into a mold) after the addition of the gelation agent in the production of the foam rubber is subjected to such slight restriction that it must be set to be a short time.

In Example 8, since the total alkalinity after adjusting the cream content was slightly high such as 0.5%, the gelation time was apt to be decreased slightly. In this case, a problem in practical application does not arise, but a cellular structure of the foam rubber was apt to become coarse slightly.

On the other hand, the gelation time was drastically decreased because the fatty acid salt-based anionic surfactant was not incorporated on decomposition of the protein in Comparative Examples 1 and 3, whereas, the protein decomposition treatment was not conducted in Comparative Example 2. As a result, both of the mechanical stability and gelation properties of the latex were insufficient in practical application.

In Comparative Examples 4 to 6, since the surfactant other than the fatty acid salt-based anionic surfactant was used, the latexes became too stable, thus causing a problem that the gelation time is excessively increased. In Comparative Example 7, since the amount of the surfactant was small, the latex did not become too stable but a problem such as poor mechanical stability could not be improved.

In Comparative Examples 8 and 9 wherein only a fatty acid salt-based anionic surfactant having 13 or less carbon atoms was incorporated, the deproteinization effect was sufficient but the gelation time could not be adjusted to a proper time.

The disclosure of Japanese Patent Application Serial No.11-307609, filed on october 28, 1999, is incorporated herein by reference.

## Claims

1. A deproteinized natural rubber latex, which comprises having protein in the latex in an amount of 0.1% by weight or less in terms of a nitrogen content based on rubber solids content and a gelation time within the range from 5 to 25 minutes under the conditions that 1.5 parts by weight of sodium silicofluoride and 3 parts by weight of zinc white are incorporated into the latex based on 100 parts by weight of the rubber solid content of the latex.

2. A deproteinized natural rubber latex according to claim 1, which is prepared by incorporating a proteolytic enzyme and a C₁₄₋₂₂ fatty acid salt-based anionic surfactant into a natural rubber latex and subjecting the mixture to a deproteinization treatment.

3. A deproteinized natural rubber latex according to claim 1 or 2, wherein the total alkalinity in the latex is within a range from 0.2 to 0.4% by weight calculated on the ammonia basis.

4. A method of producing a deproteinized natural rubber latex which has a protein content in the latex of 0.1% by weight or less in terms of a nitrogen content based on a rubber solids content and a gelation time within a range from 5 to 25 minutes under the conditions that 1.5 parts by weight of sodium silicofluoride and 3 parts by weight of zinc white are incorporated into the latex based on 100 parts by weight of the rubber solids content of the latex, which comprises incorporating a proteolytic enzyme and a C₁₄₋₂₂ fatty acid-based anionic surfactant into a natural rubber latex, decomposing a protein in the latex, and recovering a cream component containing rubber particles of the latex.

5. A method of producing a deproteinized natural rubber latex according to claim 4, wherein the total alkalinity in the latex is adjusted within a range from 0.2 to 0.4 by weight on the ammonia basis.
